# EUROPEAN PATENT SPECIFICATION

(11) **EP 3 180 262 B1**
(45) Date of publication and mention of the grant of the patent: **17.06.2020**
(21) Application number: 15741193.5
(22) Date of filing: 23.07.2015
(51) Int. Cl.: B65D 75/58, B65D 85/804

(54) **PACK FOR EXTRACTING A COFFEE BEVERAGE**
PACKUNG ZUR EXTRAKTION VON EINEM KAFFEEGETRÄNK
EMBALLAGE POUR EXTRAIRE UNE BOISSON AU CAFÉ

(30) Priority: 14.08.2014 EP 14180916
(43) Date of publication of application: 21.06.2017
(73) Proprietor: Société des Produits Nestlé S.A., 1800 Vevey (CH)
(72) Inventor: AIT BOUZIAD, Youcef, CH-1026 Echandens (CH); PERENTES, Alexandre, CH-1036 Sullens (CH); NEUROHR, Damien, CH-1950 Sion (CH)
(74) Representative: Navarro Fernández, Maria Isabel
(86) International application number: PCT/EP2015/066840
(87) International publication number: WO 2016/023727

(56) References cited:
- EP-A2- 0 179 641
- WO-A1-2011/024103
- WO-A1-2012/175985
- GB-A- 2 406 305
- US-B1- 6 347 725

## Description

### Field of the invention

The present invention relates to a pack for extracting coffee beverages; in particular it refers to a disposable pack for preparing a beverage of coffee, by means of a fitment assembly and a filtering element comprised in the disposable pack. The invention also refers to a machine for extracting coffee beverages from such a disposable pack.

### Background of the invention

Devices for preparing a beverage of coffee are known devices in the state of the art. Typically, these devices extract coffee by the use of a particular machine where hot water passes through a filter which contains unpressed ground coffee, the infused hot water being then deposited by gravity into a carafe below, where the beverage is retained. Typically, these machines comprise a water tank and a pump which sends the heated water into a container where a paper filter containing coffee is arranged. The hot water submerges the coffee and, after passing through the filter, falls by gravity into an appropriate carafe below suited for maintaining the beverage hot for a long time since it is heated by a specific electrical warming plate. However, these devices have to be cleaned after each use, are not made disposable and the paper filter needs to be replaced every time a new coffee beverage is prepared. Furthermore, the process requires long time and the beverage preparation is not optimized, varying from one preparation to another.

Other known manual devices or methods for preparing coffee beverages typically need a paper filter containing coffee, through which hot water flows in order to obtain the targeted beverage. In one way or another, when the user makes the process manually, plenty of operations need to be performed from the user's side for the preparation and for

the cleaning afterwards, which renders the process very inconvenient, tiresome and time consuming.

Using capsules comprising coffee inside, through which water is injected to brew the beverage, also presents several disadvantages, such as for example, the cost of the capsules and the packaging space needed to arrange and keep these capsules.

It is known in the state of the art document WO 2011/024103 A1 disclosing a pouch for the preparation of a beverage, comprising and inlet and an outlet opening, in communication with the inner space of the pouch where a concentrated dose is arranged for preparing the beverage.

Document WO 2012/175985 A1 discloses a capsule with a beverage preparation ingredient inside, the capsule formed by impermeable sheets defining a chamber containing the said ingredient. The capsule comprises an outlet channel and also a clamp assembly for preparing a beverage from said capsule.

Further known in the art is GB 2406305 A disclosing a compostable sheet material for packages with more than one sealable layer for a high sealing strength control. Another document is EP 0179641 A2 disclosing a sealed beverage sachet supporting a beverage-providing product and having a nozzle to locate an aqueous medium injector into the sachet.

Moreover, it is known in the state of the art document US 6347725 B1 a closed flexible sachet with ground roast coffee to be extracted under pressure formed by two flexible sheets or one folded flexible sheet.

Therefore, it would be desirable to provide a disposable flexible pack from which a coffee beverage can be extracted in a reduced time, where recipes and extraction parameters are automatically adapted such that the beverage preparation is optimized. Moreover, the pack needs to be easy to use, clean and requiring the least of input operations from the side of the consumer.

The present invention comes to provide a solution to the above-described needs, as it will be further explained. The invention also aims at other objects and particularly at the solution of other problems as will appear in the rest of the present description.

### Summary of the invention

According to a first aspect, the invention refers to a pack 100 according to claim 1.

Preferably, the inner volume of the pack 100 defined by the sheets of material presents a generally plane shape defining a plane vertically oriented during beverage production, the inlet chamber 120 being oriented essentially perpendicularly to the plane defined by the inner volume. The outlet duct 12 is arranged essentially vertically from the inner volume enabling a free flow of the coffee beverage extracted from the pack 100.

According to the invention, the inlet chamber 120 and the outlet duct 12 are comprised in a fitment assembly 10, such that the fitment assembly 10 is arranged at the bottom of the pack 100 and is at least partially positioned between two joined edges of the sheets of material.

The inlet chamber 120 of the pack 100 is preferably reversibly configured such that a first piercable lid is laid over one of the sides of the inlet chamber 120 and a second piercable lid is laid over the reverse side of the inlet chamber 120.

Preferably, the fitment assembly 10 comprises two symmetrically arranged inlet notches 110, 110' allowing the fluid to flow out of the inner volume of the inlet chamber 120.

According to a preferred embodiment, the fitment assembly 10 is made of a rigid plastic material, preferably made by injection moulding, the material being preferably selected from: polypropylene, polyethylene, polyethylene terephthalate and/or polylactic acid.

Also preferably, the outlet duct 12 is closed by means of a plug 14, the plug (14) being attached to the fitment assembly 10 on another one of its sides, the outlet duct 12 further comprising a weakened area 16 near the plug 14 allowing the separation of the plug 14 from the outlet duct 12.

The inner volume of the pack is typically defined by two flexible sheets of material bonded together at least on their lateral sides, these flexible sheets also conforming at least one piercable lid over the inlet chamber 120. Optionally, the inner volume of the pack can be configured by one single flexible sheet folded in half into two parts joined at its free edges.

Preferably, the sheets of material configuring the inner volume of the pack are water impermeable, are bonded together by thermo sealing and are made of a material being one or a combination of the following: plastic laminates, metallised foil or alufoil or fibre base material.

Typically, according to the invention, the pack 100 further comprises a fluid distributor 24 comprising a plurality of distributor configuring elements 240 for homogenously distributing the inflow of fluid in the pack before it flows through the coffee ingredient to extract the coffee beverage. Preferably, the fluid distributor 24 is configured by joining together the sheets of material configuring the inner volume of the pack to define the distributor configuring elements 240.

The distribution and homogenization characteristics of the fluid distributor 24 are a function of the size and number of the distributor configuring elements 240 and of the distance between these distributor configuring elements 240.

According to the invention, the filtering element 30 is arranged transversely in the inner volume of the pack 100 and is fixed to the lateral edges of the sheets of material configuring said inner volume.

More preferably, the pack 100 of the invention comprises identification means 60 comprising the information on the process parameters to extract the coffee beverage, as a function of the coffee ingredient, the process parameters being at least one or a combination of the following: temperature of the fluid accommodated into the inlet chamber 120, total volume of fluid and fluid flow accommodated inside the inlet chamber 120.

Typically, the pack 100 comprises two sets of symmetrically arranged identification means 60, so that the process parameters in the identification means 60 can be reversibly read.

The identification means 60 in the pack 100 preferably comprise recognition means which are at least one or a combination of the following ones: mechanical codes, optical codes, RFID tags, bar codes, magnetic codes, embossing codes or LED, the recognition means preferably comprising a plurality of punched holes 61 arranged on the lateral edges of the pack 100.

A machine 200 for extracting a coffee beverage from a pack 100 as previously described comprises receiving means 201 adapted to accommodate the pack 100 with the inlet chamber 120 and the outlet duct 12 being positioned at the bottom of the pack 100, the machine 200 further comprising injecting means 230 designed for accommodating fluid inside the volume of the inlet chamber 120.

Preferably, the injecting means 230 in the machine 200 comprise a fluid needle designed for accommodating fluid inside the volume of the inlet chamber 120 at a pressure below around 1 bar, preferably around 0.5 bar.

Typically, the machine 200 further comprises a data reader configured to read and retrieve the information of the process parameters from the identification means 60 in the pack 100, the data reader preferably comprising a light emitter device.

### Brief description of the drawings

Further features, advantages and objects of the present invention will become apparent for a skilled person when reading the following detailed description of non-limiting embodiments of the present invention, when taken in conjunction with the appended drawings, in which:
Fig. 1 shows a frontal schematic view of a pack for extracting a coffee beverage according to the present invention, comprising a fitment assembly, a filtering element and a container.
Fig. 2 shows a frontal schematic view of a pack for extracting a coffee beverage according to the present invention, comprising a fitment assembly, a filtering element and a container, showing a sloped area in one of the corners.
Fig. 3 shows a front detailed view of the fitment assembly of the pack for extracting a coffee beverage shown in Figures 1 or 2, according to the present invention.
Fig. 4 shows a detailed view of the fitment assembly of the pack for extracting a coffee beverage shown in Figures 1 or 2, according to the present invention.
Fig. 5 shows an illustration of a possible embodiment of a machine designed for slidably receiving a pack for extracting a coffee beverage according to the present invention.
Fig. 6 shows an illustration of another possible embodiment of a machine designed for receiving frontally a pack for extracting a coffee beverage according to the present invention.
Fig. 7 shows the interaction of a pack for extracting a coffee beverage according to the present invention with a beverage preparation machine.

### Detailed description of exemplary embodiments

The present invention relates to a *pack 100 for extracting a coffee beverage,* in particular the invention relates to a pack 100 for extracting a coffee beverage by means of a flow of hot water flowing through roast & ground coffee powder. The pack 100 of the invention is typically disposable and comprises a fitment assembly 10, a filtering element 30 and a container 20.

The container 20 is preferably flexible, configured as a pouch or sachet, and is typically made of two flexible sheets bonded together, preferably by welding or by heat sealing (thermo sealing), on the lateral sides 27 and 27', on the upper side 28 and on the lower side 29. The fitment assembly 10 is preferably arranged at the lower side 29 of the container 20 such that the flexible sheets cover at least partially the frontal and/or the rear side of the fitment assembly 10.

The *fitment assembly 10* has two functions within the pack 100 according to the invention: it works as inlet for the fluid (typically water) coming into the pack 100 for extracting coffee from the coffee powder which is also comprised inside the volume of the pack 100 and it also works as outlet for the coffee prepared in the pack 100.

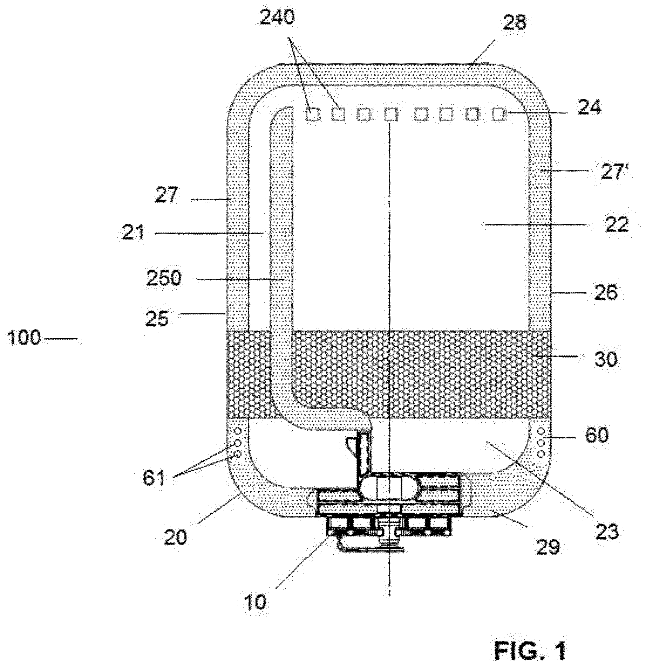

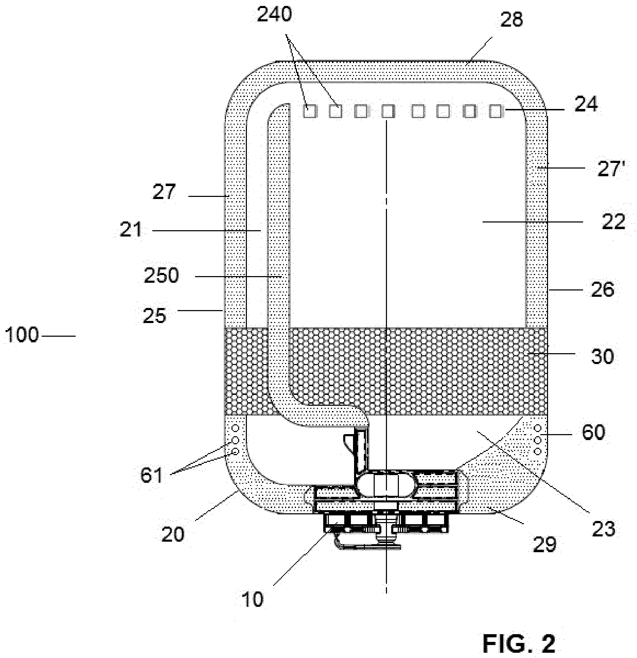

The fitment assembly 10 is preferably arranged in the lower side 29 of the pack 100, as schematically shown in Figures 1 or 2. The fitment assembly 10 comprises an outlet duct 12, preferably arranged vertically and parallel to the lateral sides 27 and 27' of the pack 100 in order to allow the dispensing of the coffee beverage by free flow: during preparation and dispensing phases, the pack 100 is preferably arranged vertically, such that the fitment assembly 10 is arranged at the lower side 29 of the container 20, i.e., at the lower side 29 of the pack 100.

The *container 20* is preferably flexible and is made of two flexible water impermeable sheets 25, 26 joined to one another to define an inner volume which is compartmented, as will be explained further in more detail. Typically, the container 20 presents an essentially plane shape being substantially flexible so that it looks like a pouch or sachet. By flexible, it is meant that the sheets 25, 26 can be bent easily. The resulting pack 100 can be bent also, as being soft and can be deformed contrary to rigid containers. The flexible sheet material for the sheets 25, 26 can be plastic laminates, metallised foil or alufoil or fibre base material. According to the invention, the container 20 can be formed of two separate flexible water impermeable sheets 25, 26 joined together or it can be formed of one single flexible water impermeable sheet folded in half into two parts or sheets 25, 26 and joined at its free edges to define the inner volume of the container 20.

According to a preferred embodiment, the container 20 is formed of one single flexible water impermeable sheet folded in half into two parts of flexible sheets which will be referred to as 25, 26, and joined at its free edges, such that the container 20 is configured as a plane pouch made of a flexible material sheet, said sheet being folded at the top of the container 20 (therefore, the upper side 28 will have no welding or heat sealing (thermo sealing) and will be made by the simple bending of the flexible sheet on top) and bonded on its edges (therefore, forming the lateral sides, 27 and 27') to define the inner volume, the bottom bonded edge (lower side 29) typically including the fitment assembly 10. This embodiment constitutes a particularly easy way to manufacture the pack 100 since it requires the cutting of only one piece of sheet - most preferably according to a rectangular shape - and its folding to create the inner volume of the container 20. Typically, also for manufacturing convenience, the fitment assembly 10 is introduced in the lower side 29 of the container 20 during the sealing of its edges, typically by welding or heat sealing.

As shown in Figures 1 or 2, the sheets 25, 26 configuring the two sides of the container 20 are further sealed together in a specific area in the inside of the container 20: the sheets 25 and 26 are preferably welded or heat sealed together, to form a compartmental channel 250 under a specific shape, as shown in Figures 1 or 2, such that internal different compartments are formed, as it will be further explained. Typically, the filtering element 30 is arranged first transversely in the sheets of material configuring the container 20, then it is fixed at the lateral sides 27 and 27' and, at a later stage, the configuration of the compartmental channel 250 is done, on top of the filtering element 30 already arranged, by sealing together the sheets 25 and 26.

The compartmental channel 250 delimits together with one of the lateral sides 27, with the upper side 28 and with part of the lower side 29 of the container 20, together with the fitment assembly 10, an inner volume defining a primary chamber 21, as illustrated in Figures 1 or 2. Part of the filtering element 30 is arranged in the primary chamber 21, as shown in any of these Figures: this configuration is preferred from a point of view of manufacturing of the pack 100 and the water can flow through this filtering element 30 inside the primary chamber 21 on its way towards the secondary chamber 22. The primary chamber 21 is intended to receive the incoming flow of fluid, preferably water, more preferably hot water, which is injected with pressure into the fitment assembly 10 (as it will be further explained) and to convey this flow of fluid upwards into a secondary chamber. The compartmental channel 250 together with the other lateral side 27' of the container 20, with the upper side 28, with part of the lower side 29 and together with the fitment assembly 10 define an inner volume which configures a secondary chamber 22, as illustrated in Figures 1 or 2. The coffee powder, typically roast and ground coffee powder, with a small particle size preferably comprised in the range from 0.2 to 0.8mm, more preferably from 0.3 to 0.4 mm, is arranged in this secondary chamber 22: when the fluid coming from the primary chamber 21 flows through the coffee powder in the secondary chamber 22, a coffee beverage is extracted from the coffee powder.

The size of the filtering element 30 is preferably comprised in the range from 200 mm² to 3000 mm², more preferably in the range from 500 mm² to 1500 mm².

Once the fluid, preferably hot water, flows through the coffee powder in the secondary chamber 22, it passes through the filtering element 30, which is arranged between the compartmental channel 250 and the lateral side 27' of the container 20, as shown in Figures 1 or 2. The filtering element 30 is configured such that only the fluid can go through and such that the coffee particles are retained in the secondary chamber 22.

As shown in Figures 1 or 2, the filtering element 30 is arranged transversely in the pack 100 fixed to the sheets of the container 20 by the sealing on the lateral sides 27 and 27': this is so by manufacturing convenience, as the sheets configuring the container 20 come typically in a continuous roll and the material out of which the filtering element 30 is going to be made also comes in a continuous form.

The filtering element 30 together with the fitment assembly 10 and with the lateral side 27' and the lower side 29 of the container 20 define a chamber called dispensing chamber 23. Once the coffee has been extracted by the fluid flowing through the coffee powder in the secondary chamber 22, it is filtered in the filtering element 30 and then flows by gravity into the dispensing chamber 23 from the filtering element 30. In this dispensing chamber 23 the filtered coffee beverage extracted is conveyed to the outside of the pack 100 through the outlet duct 12.

The container 20 also comprises a fluid distributor 24 preferably configured by welding or heat sealing together in the upper part of the container 20 the sheets of material 25, 26 which make the flexible container 20, in certain and defined parts, configuring a plurality of distributor configuring elements 240. In Figures 1 or 2 these sheets have been bonded together (typically welded or thermo sealed together) under square shapes, but it is clear that any other shape like circular, rectangular or any other would be possible and would therefore be comprised within the scope of the present invention. The fluid distributor 24 is aimed at homogeneously distribute the flow of fluid, typically hot water, into the secondary chamber 22 coming from the primary chamber 21. In this way, the flow of hot water will spread better over the complete mass of the coffee powder so that an optimised coffee is extracted. Moreover, the fluid will enter the filtering element 30 in a better distributed manner so it will be filtered more effectively.

The distribution and homogenisation characteristics of the fluid distributor 24 are a function of the size and number of the distributor configuring elements 240, and also of the distance between these distributor configuring elements 240.

Different sizes of the container 20 and therefore of the pack 100 could be used in the same machine adapted to store different quantities of ingredient and allowing different volumes of final coffee beverage extracted: typically, it is the configuration of the fitment assembly 10 as to external shape what determines the machine to use. Therefore, the size of the container 20, when extending vertically, does not determine or limit the machine. So, typically, the size of the container 20 will be adaptable and will be made so by modifying the height of said container 20.

The container 20 can also comprise an excrescence (not shown) enabling the handling of the pack 100 by the user or consumer, preferably on the upper side of the pack 100.

According to the invention, the pack 100 presents a plane shape oriented along a plane essentially vertically oriented during beverage production in such a way that the water introduced in the fitment assembly 10 flows in an upward direction in the primary chamber 21 for later passing to the secondary chamber 22 for flowing through the coffee powder arranged in this secondary chamber 22 so as to extract the coffee beverage targeted.

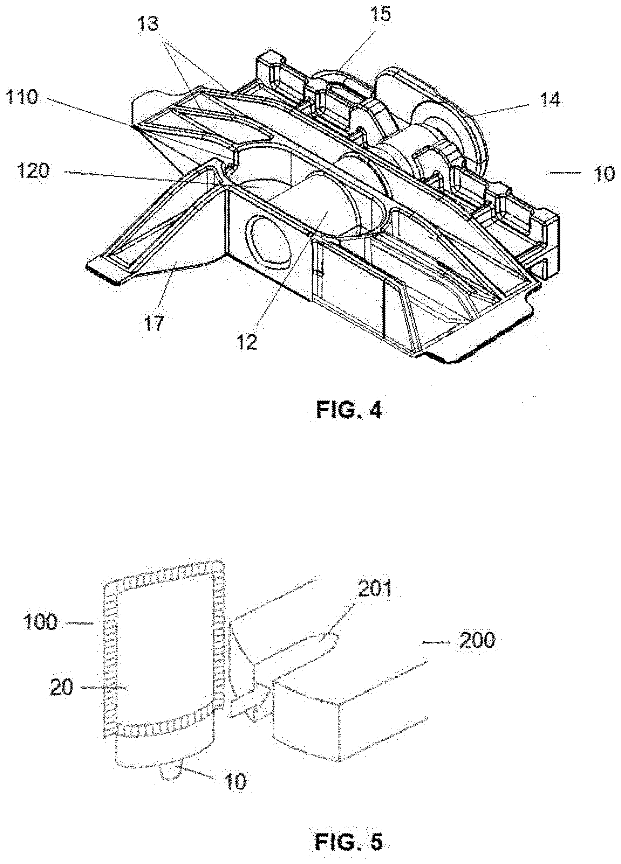

Preferably, the introduction of the *fitment assembly 10* in the bottom edge of the container during the sealing of its edges to configure the complete pack 100 makes it possible that the flexible sheets 25, 26 can cover at least partially the fitment assembly 10. As shown in Figure 4, for example, the fitment assembly 10 comprises an inlet chamber 120 which is configured by part of the fitment assembly 10 together with part of the flexible sheets 25, 26 when arranged at least partially over the two sides of the fitment assembly 10, as lids or covers. Preferably, in order to make the pack 100 reversible, the inlet chamber 120 can be accessed frontally and also from the rear part. Typically, these lids or covers will be laid over the inlet chamber 120 in a yieldably piercable way such that injecting means 230 arranged in a preparation machine will be able to access the inside volume of the inlet chamber 120 typically by piercing. Moreover, for the inlet chamber 120 to be accessed reversely, a lid will be arranged on the frontal side and another lid will be arranged in the reverse side, i.e. in the rear side. Preferably, these lids will be configured by the flexible sheets 25, 26 themselves but they can also be made out of different parts.

Preferably, the injection means 230 in the machine will be configured as a fluid needle, more preferably as a water needle, having two functions: they can pierce the lid or cover externally laid over the inlet chamber 120 (either frontally or in the rear part depending on the sense of introduction of the pack 100 in the machine, typically configured by the flexible sheets 25, 26 of the container 20) and they can also inject pressurized fluid into the inner volume of said inlet chamber 120.

As previously described, the inlet chamber 120 will be pierced in the part of the flexible sheets 25, 26 which are arranged over the external parts of the fitment assembly 10 making the inlet chamber 120. Consequently during the single step of bonding the edges of the sheet, it is possible to simultaneously create the inner volume of the container 20, to place the fitment assembly 10 and to close the inlet chamber 120. Preferably the outlet duct 12 is not completely covered by the flexible sheets. Yet it can be visually hidden by a part of the sheets 25, 26 e.g. by a skirt of the sheets. Also preferably, according to the invention, the fitment assembly 10 comprises ribs 13 arranged in at least one of the external surfaces of the fitment assembly 10 for improving the adhesion of the fitment assembly 10 with the flexible material sheet during sealing.

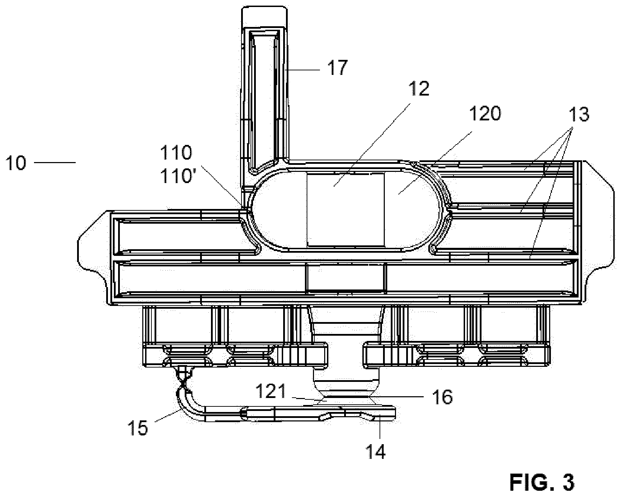

As already described and as it is shown in Figures 3 or 4, the fitment assembly 10 of the invention comprises an inlet chamber 120 into which fluid is injected by injecting means 230, typically a needle, arranged in a machine into which the pack 100 is inserted for the preparation and dispensing of the coffee beverage. The fitment assembly 10 also comprises an inlet notch 110, preferably two symmetrically arranged inlet notches 110 and 110' (to make the pack 100 be reversible when used in a machine) in the part of the fitment assembly 10 defining the inlet chamber 120: the fluid, typically hot water, injected into the inlet chamber 120 passes towards the primary chamber 21 through these inlet notches 110, 110'.

The fitment assembly 10 of the invention also comprises ribs 13, preferably arranged on both sides of the fitment assembly 10: these ribs 13 are provided on the sides of the fitment assembly 10 to help engage the sheets 25, 26 onto the fitment assembly 10, preferably by welding or heat sealing. Moreover, the fitment assembly 10 comprises an outlet duct 12 through which the coffee beverage is finally dispensed. Preferably the outlet duct 12 is closed by a plug 14, said plug 14 comprising means for maintaining it attached to the fitment assembly 10 after the opening of the outlet duct 12. Consequently the plug 14 does not interfere with the dispensing of the coffee beverage when it is provided through the outlet duct 12, neither does it fall in the beverage during its production. The means for maintaining the plug 14 attached to the fitment assembly 10 can be a plastic bond 15 attached to the fitment assembly 10, for example, or any other suitable means providing a similar effect. Moreover, the outlet duct 12 can also comprise a weakened area 16 near the plug 14: this weakened area 16 can be made for example as a narrowing of the outlet duct 12 so that it is easier to cut or tear off the plug 14 by the machine once the pack 100 is introduced in it for being processed. Typically, the machine where the pack 100 is introduced cuts or tears the plug 14 automatically when the pack 100 is introduced in the machine or when the or when the beverage preparation is activated.

The outlet duct 12 in the fitment assembly 10 of the invention is preferably configured so that it delivers the product as a free flow, meaning that the product can flow from the outlet duct 12 by simple gravity fall. According to a preferred embodiment of the invention, the outlet duct 12 comprises an opening 121 at the bottom of the fitment assembly 10, said opening 121 having a transverse section with a surface area equivalent to the surface of a circular surface of diameter of at least 1 mm, preferably at most 4 mm, even more preferably comprised between 1.5 and 3 mm. The outlet duct 12 is typically configured as a straight tube oriented essentially vertically in the fitment assembly 10, comprising at its end an opening 121. The length of the tube of the outlet duct 12 is preferably of at least 5 mm. An advantage of the outlet duct 12 of the present invention is that there is no need to implement a particular connection between the mentioned outlet and the machine when a beverage is produced in order to direct the flow of the beverage delivered at the outlet duct 12: the beverage can flow from the outlet duct 12 directly into a drinking cup.

As schematically represented in Figure 2, the inside volume of the pack 100 comprises in one of its edges a sloped area 40 having an internal shape which aims at conveying all the fluid coming from the filtering element 30 directing it towards the entry of the outlet duct 12 in the fitment assembly 10, in such a way that no fluid is retained in the pack 100 and is not delivered.

According to the invention, before the coffee beverage is prepared, the outlet duct 12 is closed at its end: generally the outlet duct 12 is closed by manufacturing and is configured for being opened at the food or beverage production step by the machine. By "closed by manufacturing" it is meant that a complete pack 100, comprising the container 20 and the fitment assembly 10, is manufactured with a closed outlet duct 12. This closure guarantees hygienic and shelf life protection. The outlet duct 12 can be opened by the machine preparing the coffee beverage or it can be opened manually by the consumer.

Preferably the plug 14 is part of one single fitment assembly 10: in particular when the spout assembly 10 is made by injection moulding, the design of the mould also comprises that of the plug 14. In the same manner the plastic bond 15 can also be part of the design of the fitment assembly 10 when it is made by injection moulding, which again provides advantages from a manufacturing point of view, as the same part comprises the plug 14 and the bond 15.

The fitment assembly 10 also comprises, as depicted in Figure 3, a sealing wall 17 which is arranged vertically on the upper part of the fitment assembly 10: the flexible sheets 25, 26 of the container 20 are welded or heat sealed to this sealing wall 17 in order to configure one of the sides of the primary chamber 21 and also another side of the dispensing chamber 23.

The fitment assembly 10 is preferably rigid and is made of a rigid plastic material, preferably by injection moulding. Typically, this plastic material configuring the fitment assembly 10 can be selected from the following: polypropylene, polyethylene, polyethylene terephthalate and polylactic acid. Also according to a less preferred embodiment the fitment assembly 10 can be made of a metal like aluminium or tin-plate, for example.

According to the invention, the pack 100 will also be provided with identification means 60: these identification means 60 comprise the information of the type of roast and ground coffee powder comprised in the pack 100 and also the information for the optimum processing of this coffee powder in a machine where the beverage will be prepared (therefore, comprising the recipe information to extract the coffee beverage). The identification means 60 will be arranged either in the fitment assembly 10 and/or in the container 20. A simpler execution will be to provide these identification means 60 in the pack 20, preferably in the lateral sides 27, 27' where the flexible sheets 25 and 26 are welded or heat sealed together and where there is no product (coffee) that would avoid the arrangement of these means. The identification means 60 comprise the information provided to the machine regarding the process parameters to be followed to extract the coffee beverage, in particular: temperature of water introduced by the injecting means 230 in the inlet chamber 120, total volume of water introduced and water flow to be provided through the mentioned injecting means 230. Further explanation will be provided in the description that follows.

One of the primary advantages of the present invention is that the pack 100 is reversible, so the user can introduce it in one sense or the other in the machine, and the process will develop in the same way independently on the sense of introduction. For this reason, when the identification means 60 are provided in the pack 100, two sets of identification means 60 will preferably be provided, symmetrically arranged, on both lateral sides, 27 and 27', of the container 20 as shown in Figures 1 or 2: in this way, the machine can read one or the other set of identification means 60, depending on the sense in which the pack 100 has been introduced in the machine.

Such identification means 60 can comprise any kind of recognition means such as, for example, mechanical codes, optical codes, RFID tags, bar codes, magnetic codes, embossing codes, LED or any other. Most preferably, the identification means 60 of the invention will be made as punched holes 61 (schematically represented in Figures 1 or 2) arranged on the sealed lateral edges 27, 27' of the container 20. When the two sheets 25 and 26 are brought together and are welded or heat sealed on the edges to configure the container 20, additional punching will be provided, thus configuring the punched holes 61. A plurality of holes will typically be provided vertically on each one of the lateral sides 27 and 27' of the container 20 to configure the two sets of identification means 60 symmetrically arranged in the container 20: these holes will be made transparent for light, allowing the light to pass through. When light passes through the plurality of holes configuring these identification means 60, the machine will be then provided with information on the process parameters to follow in order to extract the coffee beverage targeted.

As shown in Figures 1 or 2, the filtering element 30 in the pack 100 of the invention is arranged transversely between the two lateral sides of the container, partly arranged in the primary chamber 21 and partly arranged between the secondary chamber 22 and the dispensing chamber 23: in this way, the water flowing through the coffee powder in the secondary chamber 22 necessarily needs to pass through this filtering element 30 in order to access the dispensing chamber 23, meaning that no product can be dispensed when it has not been filtered.

The filtering element 30 can be made of paper, preferably of disposable paper, of a plastic mesh, for example, or of any other suitable material enabling the filtering element 30 to trap the coffee powder particles allowing the liquid coffee to flow through. The filtering element 30 will be configured according to the main parameters defining its characteristics, namely: wet strength, porosity, particle retention, flow rate, compatibility, efficiency and capacity, amongst others.

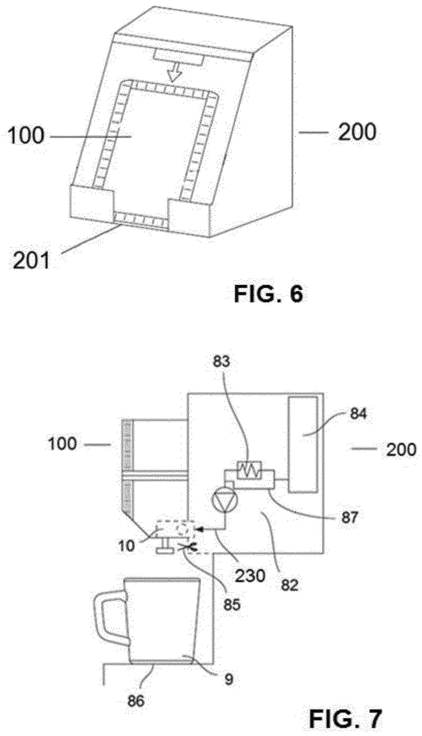

A *machine 200* for extracting a coffee beverage from a pack 100 as described previously, as schematically illustrated in Figure 7, comprises receiving means 201 adapted to accommodate the pack 100 preferably in such a way that the pack 100 is positioned vertically and the fitment assembly 10 is positioned at the bottom of the pack 100. The machine 200 further comprises injecting means 230, preferably piercing and injecting means, designed for piercing the cover or lid over the inlet chamber 120 for introducing water into the mentioned inlet chamber 120. Because the pack 100 is preferably configured reversible, either if the pack 100 is introduced in one sense or the other in the machine 200, the piercing and injecting 230 means will pierce either one or the other side of the lid or cover over the inlet chamber 120, with same result as water will in any case be conveyed into the inlet chamber 20 and from there, through the symmetrically arranged inlet notches 110, 110', into the primary chamber 21.

Preferably, the injecting means 230 comprise a fluid needle, called simply needle, comprising an inner duct or pipe through which fluid, typically water, is introduced in the inlet chamber 120. Water is injected at a pressure of typically less than 1 bar, more preferably at about 0.5 bar to extract the coffee beverage. As the pressure is low, there is no problem of tightness with the pack 100 and machine 200 of the invention. The water is introduced by the injecting means 230 in a continuous way during a certain time and under a certain flow rate and until a total volume of water is achieved, which is provided by the identification means 60 in the pack 100. The process with the pack 100 is done in a continuous way and is faster than standard processes (usually, it takes around 1 minute to have the beverage ready). The water injected by the piercing and injecting means 230 is preferably hot, and is preferably provided at a temperature comprised between 80°C and 95°C.

The injecting means 230 can also comprise a toroidal ring, preferably made of rubber, ensuring that there is no leakage of fluid outside the inlet chamber 120 while the injecting means 230 are introduced and are injecting water into the inlet chamber 120.

The machine 200 also comprises a data reader, preferably comprising an optical device, which reads and retrieves the information from the identification means 60 regarding the process parameters to be used for extracting the coffee beverage. Preferably, the process parameters used by the machine 200 to prepare the correct recipe of the coffee powder in the pack 100, retrieved by the data reader, would be at least one or a combination of the following: temperature of water introduced by the injecting means 230 in the inlet chamber 120; total volume of water introduced in the inlet chamber 120; and water flow provided through the injecting means 230 also into the inlet chamber 120.

Preferably, the data reader will retrieve the information from the identification means 60 in the pack 100 by a light emitter device emitting light passing through the punched holes 61 configuring the identification means 60.

Typically, as the pack 100 is processed to obtain the coffee beverage in an essentially vertical position in the machine 200, the pack 100 will be introduced either frontally in the machine 200 (as schematically represented in Figure 6) or laterally, so that the pack 100 is slidably inserted into a dedicated insert in the machine 100 (as schematically represented in Figure 5). In the first case, that of Figure 6, the receiving means 201 in the machine 200 will be arranged to accommodate the pack 100 in a frontal position: as the pack 100 is reversible, it can be introduced either in a frontal positioning in the dedicated receiving means 201, or in a rear positioning in said receiving means 201. In the second case, that of Figure 5, the receiving means 201 in the machine 200 will be arranged to accommodate the pack 100 in a lateral or side position: as the pack 100 is reversible, it can be introduced in any of the two possible lateral senses into the dedicated receiving means 201. In any of the two cases described, the injecting means 230 will be able to pierce and inject water in one of the two sides of the inlet chamber 120, and the data reader will also be able to read the information in one of the two sets of identification means 60 provided in the container 20.

Moreover, the machine 200 of the invention comprises a fluid supply or tank 84 and a pump 82, preferably a water pump, providing water to the injecting means 230. This water is preferably provided at a certain temperature, preferably comprised between 80°C and 95°C, with the aid of a heater 83. The machine can optionally also comprise a bypass line 87 for delivering fluid, typically water, at ambient temperature, and a valve (not illustrated) for the selection of either hot or ambient fluid. The machine 200 will also typically comprise a cutting device 85 for cutting or tearing the plug 14 from the outlet duct 12 once the pack 100 has been inserted in the machine 200 or once the brewing process has started.

The cutting device 85 for cutting or tearing the plug 14 is preferably arranged in the machine 200 in such a way that the plug is automatically cut when the pack 100 is introduced in the machine 200 or when the beverage preparation is activated.

Preferably the machine 200 further comprises a positioning area 86 for allocating a drinking cup 9 under the dispensing outlet duct 12 of the pack 100 when a beverage is prepared.

Also, the machine 200 typically comprises squeezing means (not illustrated in Figure 11) which squeeze the container 20 once the coffee beverage has been dispensed in order to extract any remaining liquid inside the container 20, so as to avoid dripping. Moreover, the squeezing of the container 20 will allow that the end pack 100, which is disposable, will have a final more compact shape that will facilitate its removal.

Also according to the invention, *a pack 100* as the one described above comprising a fitment assembly 10, a filtering element 30 and a container 20, *would preferably be made following these steps*:
- folding a sheet of material, introducing transversely a filtering element 30 and bonding both lateral sides 27 and 27' of it to form a pouch;
- bonding together by welding or heat sealing the two sheets 25 and 26 to conform the compartmental channel 250;
- filling the secondary chamber 22 configured inside the volume of the pack 100 with roast and ground coffee powder;
- positioning the fitment assembly 10 in the lower part of the pouch, where remaining open edges exist and bonding (by welding or heat sealing) said lower side 29;
- configuring the identification means 60 preferably by punching the lateral sides 27 and 27' of the pouch or container 20;
- configuring the fluid distributor 24 on the upper part of the pouch, also by punching.

The *method of using a pack 100* configured as previously described, comprising a fitment assembly 10, a filtering element 30 and a container 20, in a machine 200 to extract a coffee beverage can comprise several steps, as will be described herewith in what follows.

First, the pack 100 is introduced in the machine 200 in an essentially vertical way, in such a manner that the fitment assembly 10 is arranged at the bottom side of the pack 100. Either once the pack has been introduced or once the preparation and dispensing step starts, the machine 200 will cut or tear off the plug 14 from the outlet duct 12 in order to leave open the opening of the outlet duct 121. Then, the injecting means 230 from the machine 200 will pierce the lid or membrane arranged over the inlet chamber 120. As already explained, any of the two sides of the membrane over the inlet chamber 120 will be pierced, depending on the sense in which the pack 100 has been introduced in the machine 200.

Also, the data reader of the machine 200 will read the identification means 60 in one of the sides 27 or 27' of the container 20, depending on the sense in which it has been introduced. The data reader will then retrieve the information regarding the temperature, the total volume and the flow rate of the fluid, typically water, to be introduced by the injecting means 230 into the inlet chamber 120.

Once the membrane is pierced, the injecting means 230 will inject preferably water, inside the inlet chamber 120, at a pressure below 1 bar, most preferably at around 0.5 bar. The rest of parameters of this injection (temperature, volume and flow rate, referred to before as process parameters) will have been provided by the data reader when reading the identification means 60. The water injected will then be conveyed from the inlet chamber 120 through the inlet notches 110, 110' into the primary chamber 21. The water will then flow upwardly into the inner volume of the primary chamber 21 (passing also through part of the filtering element 30 arranged in this primary chamber 21) towards the upper part of the pack 100.

The water will then pass through the fluid distributor 24 and will be homogenously distributed and spread into the secondary chamber 22 with the aid of the distributor configuring elements 240. Once in the secondary chamber 22, the water will flow downwards by gravity and will flow through the coffee powder so as to extract coffee, further being conveyed towards the filtering element 30.

When passing through the filtering element 30, the extracted coffee liquid will be able to go through and into the dispensing chamber 23 while the coffee powder particles will be retained in the secondary chamber 22.

Once in the dispensing chamber 23, the extracted coffee beverage will be conveyed towards the entrance of the outlet duct 12 of the fitment assembly, even more easily with the aid of the sloped area 40 on one of the edges of the pack 100. The coffee beverage will then flow by gravity to the outside of the pack 100 through the outlet duct 12 and into a dedicated drinking cup 9, for example.

It is important to remark that the design of the fitment assembly 10 together with the flexible sheets 25 and 26 which are bonded (welded or thermo sealed, typically) to it define paths for the fluid to flow inside the pack 100 in such a way that the fluid is forced to follow these paths and cannot go through any others. In fact, the sheets 25, 26 are bonded to the fitment assembly 10 in a tight way, therefore tight paths are configured.

At the end of the process, the squeezing means of the machine 200 will squeeze the container 20 with the aim of evacuating any remaining liquid inside the container 20, in order to avoid any dripping, and also with the aim of reducing the final volume of the container 20, making it more compact, so that its removal is easier.

Particularly, these sealed or tight paths are the following:
- once the fluid is injected into the inlet chamber 120, the only path to follow is that formed by the inlet notches 110 and 110' in the inlet chamber 120 together with the flexible sheets 25 and 26, so the fluid is forced to pass through these inlet notches 110, 110' and flow into the primary chamber 21;
- inside the primary chamber 21, the fluid can only be conveyed upwards and towards the fluid distributor 24, through the lateral side of the container 27 and the compartmental channel 250;
- inside the secondary chamber 22, the fluid can only flow downwards by gravity between the compartmental channel 250 and the lateral side of the container 27', passing through the filtering element 30 into the dispensing chamber 23;
- inside the dispensing chamber 23, the fluid can only flow downwardly by gravity between the lateral side of the container 27', the lower side of the container 29 and the sealing wall 17, so the only way possible is to enter the outlet duct 12 in the fitment assembly from where the fluid (already extracted and filtered) is finally dispensed by gravity into a drinking cup 9 or the like.

Some of the *advantages* of the disposable pack of the invention and of the machine processing these packs will be described in what follows.

The pack of the invention is configured in a reversible way, so it can be operated in the machine in any sense in which it has been introduced, which presents a primary advantage for the consumer, who does not need to check or introduce the pack in a specific way. Therefore, it is one aim of the invention to propose a consumer friendly extraction of coffee, where the beverage from the pack is ready to be served and does not require any additional processing. Moreover, best in-cup results are achieved as the extraction and processing is pre-defined and in fact comprised in the information on the identification means.

Another advantage comes from the manufacturing of the packs of the invention: as the fitment assembly has the same outer shape on both of its sides, when the flexible sheets are laid over at least part of this fitment assembly, there is no risk of crippling.

Also, in the pack of the invention the ingredients are fully protected from atmosphere before use. Besides, these packs present a low environmental impact since they can be made of a laminated pouch with a small insert piece (fitment assembly) of plastic.

The space needed for storing the packs according to the invention, the space needs the consumer has to preview for the packs is clearly much less than that for typical capsule containers, for example.

Other advantages of the invention come from the machine: the machine elements remain very simple and limited to a simple fluid needle, typically a simple water needle, piercing the pack and injecting the fluid, typically water, into the pack, to prepare the coffee beverage. Also, the data reader needed to read and retrieve information from the identification means is a simple device.

Also, another important advantage of the invention is to propose packs where the contact of ingredients and extracted coffee beverage with the machine is avoided and the risk of cross contamination is therefore limited. The prepared beverages present optimal organoleptic properties.

Another main advantage for the consumer, provided by the invention is that the injecting means, typically a needle, do not touch the product at all, so any type of contamination is avoided.

Besides, some other advantages of the pack of the invention are indicated herewith:
- the pack is flexible and adaptable, thus easy to handle
- the weight of the pack is low and remains minimised
- the extraction parameters come with the pack and the recipe is therefore optimised
- the pack is disposable so requires no cleaning of the machine and is extremely practical to use
- the machine operates the pack under direct flow, so there is no fluid which flows inside any part of the machine, avoiding any cleaning needs or any possible contamination in the machine
- the process of extracting the coffee beverage is continuous, which therefore minimises the time needed
- the coffee beverage extracted directly flows into the cup or recipient, so the process is simple and easy for the consumer.

Although the present invention has been described with reference to preferred embodiments thereof, many modifications and alternations may be made by a person having ordinary skill in the art without departing from the scope of this invention which is defined by the appended claims.

### LIST OF REFERENCES

- 100: Pack
30 Filtering element
60 Identification means
61 Punched holes
250 Compartmental channel
24 Fluid distributor
240 Distributor configuring elements
21 Primary chamber
22 Secondary chamber
23 Dispensing chamber
40 Sloped area

- 10: Fitment assembly
120 Inlet chamber
110 Inlet notch
110' Inlet notch
13 Ribs
14 Plug
15 Bond
16 Weakened area
12 Outlet duct
17 Sealing wall
121 Opening of outlet duct

- 20: Container
27 Lateral side of container
27' Lateral side of container
28 Upper side of container
29 Lower side of container
25 Flexible sheet of container
26 Flexible sheet of container

- 200: Machine
201 Receiving means
84 Fluid tank
82 Pump
83 Heater
87 By-pass line
85 Cutting device
86 Positioning area
9 Drinking cup
230 Injecting means

## Claims

1. Pack (100) having an inner volume in which a coffee ingredient is stored and from which a coffee beverage is extracted when a fluid is introduced inside the pack (100), said inner volume being defined by sheets of material joined to one another at their edges, such that the inner volume presents a generally plane shape,
said pack (100) comprising an inlet chamber (120) configured to accommodate an inflow of fluid that will flow through the coffee ingredient to extract a coffee beverage and at least one outlet duct (12) for delivering the coffee beverage from said inner volume,
the pack comprising a fitment assembly (10), where the inlet chamber (120) and the outlet duct (12) are comprised, the fitment assembly (10) being arranged at the bottom of the pack (100) and being at least partially positioned between two joined edges of the sheets of material,
the pack (100) further comprising a filtering element (30) arranged transversely in the sheets of material configuring the container (20) and fixed to the lateral edges of the sheets of material configuring said inner volume, being further configured for preventing the particles of the coffee ingredient from entering the outlet duct (12) when fluid is introduced in the pack and the coffee beverage is extracted, thus preventing these particles from being delivered together with the coffee beverage, the pack also comprising a compartmental channel (250) formed by sealing together the sheets of material under a specific shape,
the inlet chamber (120) and the outlet duct (12) being positioned at the bottom of the pack (100),
and compartmental channel (250) delimiting an inner volume defining a primary chamber (21) receiving the incoming flow of fluid injected into the fitment assembly (10) and conveying this flow of fluid upwards into a secondary chamber (22), the compartmental channel (250) delimiting an inner volume defining this secondary chamber (22) where the coffee ingredient is arranged.

2. Pack (100) according to claim 1 wherein the inner volume defined by the sheets of material presents a generally plane shape defining a plane vertically oriented during beverage production, the inlet chamber (120) being oriented essentially perpendicularly to the plane defined by the inner volume, the outlet duct (12) being arranged essentially vertically from the inner volume enabling a free flow of the coffee beverage extracted from the pack (100).

3. Pack (100) according to any of the previous claims wherein the inlet chamber (120) is reversibly configured in the pack such that a first piercable lid is laid over one of the sides of the inlet chamber (120) and a second piercable lid is laid over the reverse side of the inlet chamber (120).

4. Pack (100) according to claim 3 wherein the fitment assembly (10) comprises two symmetrically arranged inlet notches (110, 110') allowing the fluid to flow out of the inner volume of the inlet chamber (120).

5. Pack (100) according to any of claims 3-4, the fitment assembly (10) being made of a rigid plastic material, preferably made by injection moulding, the material being preferably selected from: polypropylene, polyethylene, polyethylene terephthalate and/or polylactic acid.

6. Pack (100) according to any of claims 3-5 wherein the outlet duct (12) is closed by means of a plug (14), the plug (14) being attached to the fitment assembly (10) on another one of its sides, the outlet duct (12) further comprising a weakened area (16) near the plug (14) allowing the separation of the plug (14) from the outlet duct (12).

7. Pack (100) according to any of the previous claims wherein the inner volume of the pack is defined by two flexible sheets of material bonded together at least on their lateral sides, these flexible sheets also conforming at least one piercable lid over the inlet chamber (120).

8. Pack (100) according to any of claims 1-6 wherein the inner volume of the pack is configured by one single flexible sheet folded in half into two parts joined at its free edges.

9. Pack (100) according to any of the previous claims wherein the sheets of material configuring the inner volume of the pack are water impermeable, are bonded together by thermo sealing and are made of a material being one or a combination of the following: plastic laminates, metallised foil or alufoil or fibre base material.

10. Pack (100) according to any of the previous claims further comprising a fluid distributor (24) comprising a plurality of distributor configuring elements (240) for homogenously distributing the inflow of fluid in the pack before it flows through the coffee ingredient.

11. Pack (100) according to claim 10 wherein the fluid distributor (24) is configured by joining together the sheets of material configuring the inner volume of the pack to define the distributor configuring elements (240).

12. Pack (100) according to any of claims 10-11 wherein the distribution and homogenization characteristics of the fluid distributor (24) are a function of the size and number of the distributor configuring elements (240) and of the distance between these distributor configuring elements (240).

13. Pack (100) according to any of the previous claims further comprising identification means (60) comprising the information on the process parameters to extract the coffee beverage, as a function of the coffee ingredient, the process parameters being at least one or a combination of the following: temperature of the fluid accommodated into the inlet chamber (120), total volume of fluid and fluid flow accommodated inside the inlet chamber (120).

14. Pack (100) according to claim 13 wherein two sets of symmetrically arranged identification means (60) are arranged in the pack, so that the process parameters in the identification means (60) can be reversibly read.

15. Pack (100) according to any of claims 13-14, wherein the identification means (60) comprise recognition means being at least one or a combination of the following ones: mechanical codes, optical codes, RFID tags, bar codes, magnetic codes, embossing codes or LED, the recognition means preferably comprising a plurality of punched holes (61) arranged on the lateral edges of the pack (100).

## Patentansprüche

1. Packung (100), aufweisend ein Innenvolumen, in dem ein Kaffeebestandteil gelagert ist und aus dem ein Kaffeegetränk extrahiert wird, wenn ein Fluid in die Packung (100) eingeführt wird, wobei das Innenvolumen durch Materialbahnen definiert ist, die an ihren Rändern miteinander verbunden sind, sodass das Innenvolumen eine allgemein ebene Form aufweist,
wobei die Packung (100) eine Einlasskammer (120) umfasst, die so konfiguriert ist, dass sie einen Zustrom von Fluid aufnimmt, das den Kaffeebestandteil durchströmt, um ein Infusionsgetränk zu extrahieren, und mindestens einen Auslasskanal (12) zum Abgeben des Kaffeegetränks aus dem Innenvolumen,
wobei die Packung eine Zubehörbaugruppe (10) umfasst, in der die Einlasskammer (120) und der Auslasskanal (12) enthalten sind, wobei die Zubehörbaugruppe (10) an der Unterseite der Packung (100) angeordnet ist und zumindest teilweise zwischen zwei verbundenen Rändern der Materialbahnen positioniert ist,
wobei die Packung (100) ferner ein Filterelement (30) umfasst, das quer in den Materialbahnen angeordnet ist, die den Behälter (20) bilden, und an den seitlichen Rändern der Materialbahnen befestigt ist, die das Innenvolumen bilden, und ferner so konfiguriert ist, dass verhindert wird, dass die Partikel des Kaffeebestandteils in den Auslasskanal (12) eintreten, wenn Fluid in die Packung eingeführt und das Kaffeegetränk extrahiert werden, wodurch verhindert wird, dass diese Partikel zusammen mit dem Kaffeegetränk abgegeben werden, wobei die Packung ferner einen Kammerkanal (250) umfasst, der durch Zusammenschweißen der Materialbahnen unter einer bestimmten Form gebildet ist,
wobei die Einlasskammer (120) und der Auslasskanal (12) am Boden der Packung (100) positioniert sind,
und der Kammerkanal (250) ein Innenvolumen begrenzt, das eine Primärkammer (21) definiert, die den einströmenden Fluidstrom aufnimmt, der in die Zubehörbaugruppe (10) eingespritzt wird, und diesen Fluidstrom nach oben in eine Sekundärkammer (22) leitet, wobei der Kammerkanal (250) ein Innenvolumen begrenzt, das diese Sekundärkammer (22) definiert, in der der Kaffeebestandteil angeordnet ist.

2. Packung (100) nach Anspruch 1, wobei das durch die Materialbahnen definierte Innenvolumen eine allgemein ebene Form aufweist, die eine bei der Getränkeherstellung vertikal ausgerichtete Ebene definiert, wobei die Einlasskammer (120) im Wesentlichen senkrecht zu der durch das Innenvolumen definierten Ebene ausgerichtet ist, wobei der Auslasskanal (12) im Wesentlichen vertikal vom Innenvolumen angeordnet ist und einen freien Strom des aus der Packung (100) extrahierten Kaffeegetränks ermöglicht.

3. Packung (100) nach einem der vorstehenden Ansprüche, wobei die Einlasskammer (120) in der Packung reversibel so konfiguriert ist, dass ein erster durchstechbarer Deckel über eine der Seiten der Einlasskammer (120) und ein zweiter durchstechbarer Deckel über die Rückseite der Einlasskammer (120) gelegt werden.

4. Packung (100) nach Anspruch 3, wobei die Zubehörbaugruppe (10) zwei symmetrisch angeordnete Einlasskerben (110, 110') umfasst, die es ermöglichen, dass das Fluid aus dem Innenvolumen der Einlasskammer (120) strömt.

5. Packung (100) nach einem der Ansprüche 3 bis 4, wobei die Zubehörbaugruppe (10) aus einem starren Kunststoffmaterial hergestellt ist, vorzugsweise durch Spritzgießen, wobei das Material vorzugsweise ausgewählt ist aus: Polypropylen, Polyethylen, Polyethylenterephthalat und/oder Polymilchsäure.

6. Packung (100) nach einem der Ansprüche 3 bis 5, wobei der Auslasskanal (12) durch einen Stopfen (14) verschlossen ist, wobei der Stopfen (14) an der Zubehörbaugruppe (10) an einer anderen ihrer Seiten befestigt ist und der Auslasskanal (12) ferner einen geschwächten Bereich (16) in der Nähe des Stopfens (14) umfasst, der die Trennung des Stopfens (14) vom Auslasskanal (12) ermöglicht.

7. Packung (100) nach einem der vorstehenden Ansprüche, wobei das Innenvolumen der Packung durch zwei flexible, mindestens an ihren Seitenflächen miteinander verbundene Materialbahnen definiert ist, wobei diese flexiblen Bahnen zusammen außerdem mindestens einen durchstechbaren Deckel über der Einlasskammer (120) bilden.

8. Packung (100) nach einem der Ansprüche 1 bis 6, wobei das Innenvolumen der Packung durch eine einzige flexible Bahn gebildet ist, die an ihren freien Rändern in zwei miteinander verbundene Teile hälftig gefaltet ist.

9. Packung (100) nach einem der vorstehenden Ansprüche, wobei die Materialbahnen, die das Innenvolumen der Packung bilden, wasserundurchlässig sind, durch Thermosiegelung miteinander verbunden sind und aus einem Material bestehen, das eines oder eine Kombination der folgenden ist: Kunststofflaminate, metallisierte Folie oder Alufolien- oder Fasergrundstoff.

10. Packung (100) nach einem der vorstehenden Ansprüche, die ferner einen Fluidverteiler (24) umfasst, der eine Vielzahl von VerteilerKonfigurationselementen (240) zum homogenen Verteilen des Zustroms von Fluid in der Packung vor dem Durchströmen des Kaffeebestandteils umfasst.

11. Packung (100) nach Anspruch 10, wobei der Fluidverteiler (24) durch Zusammenfügen der Materialbahnen konfiguriert ist, die das Innenvolumen der Packung konfigurieren, um die Verteiler-Konfigurationselemente (240) zu definieren.

12. Packung (100) nach einem der Ansprüche 10 bis 11, wobei die Verteilungs- und Homogenisierungseigenschaften des Fluidverteilers (24) von der Größe und Anzahl der Verteilerkonfigurationselemente (240) und dem Abstand zwischen diesen Verteilerkonfigurationselementen (240) abhängig sind.

13. Packung (100) nach einem der vorstehenden Ansprüche, ferner umfassend Kennzeichnungsmittel (60), die die Informationen über die Prozessparameter zum Extrahieren des Kaffeegetränks in Abhängigkeit vom Kaffeebestandteil umfassen, wobei die Prozessparameter mindestens eines oder eine Kombination der folgenden sind: Temperatur des in die Einlasskammer (120) aufgenommenen Fluids, Gesamtvolumen des Fluids und Fluidstrom, der in der Einlasskammer (120) aufgenommen wird.

14. Packung (100) nach Anspruch 13, wobei zwei Sätze von symmetrisch angeordneten Kennzeichnungsmitteln (60) so in der Packung angeordnet sind, dass die Prozessparameter in den Kennzeichnungsmitteln (60) aus beiden Richtungen gelesen werden können.

15. Packung (100) nach einem der Ansprüche 13 bis 14, wobei die Kennzeichnungsmittel (60) Erkennungsmittel umfassen, die mindestens eines oder eine Kombination der folgenden sind: mechanische Codes, optische Codes, RFID-Tags, Barcodes, magnetische Codes, Prägecodes oder LED, wobei die Erkennungsmittel vorzugsweise eine Vielzahl von gestanzten Löchern (61) umfassen, die an den Seitenrändern der Packung (100) angeordnet sind.

## Revendications

1. Paquet (100) ayant un volume interne dans lequel est stocké un ingrédient de café et à partir duquel est extraite une boisson de café lorsqu'un fluide est introduit à l'intérieur du paquet (100), ledit volume interne étant défini par des feuilles de matériau jointes les unes aux autres au niveau de leurs bords, de sorte que le volume interne présente une forme généralement plane,
ledit paquet (100) comprenant une chambre d'entrée (120) configurée pour recevoir un écoulement de fluide qui va s'écouler à travers l'ingrédient de café pour extraire une boisson de café et au moins un conduit de sortie (12) pour distribuer la boisson de café à partir dudit volume interne,
le paquet comprenant un ensemble de montage (10), dans lequel la chambre d'entrée (120) et le conduit de sortie (12) sont compris, l'ensemble de montage (10) étant disposé au fond du paquet (100) et étant au moins partiellement positionné entre deux bords joints des feuilles de matériau,
le paquet (100) comprenant en outre un élément filtrant (30) disposé transversalement dans les feuilles de matériau configurant le récipient (20) et fixé aux bords latéraux des feuilles de matériau configurant ledit volume intérieur, étant en outre configuré pour empêcher les particules de l'ingrédient de café de pénétrer dans le conduit de sortie (12) lorsque le fluide est introduit dans le paquet et que la boisson de café est extraite, empêchant ainsi ces particules d'être distribuées conjointement avec la boisson de café, le paquet comprenant également un canal de compartimentation (250) formé par scellage conjoint des feuilles de matériau sous une forme spécifique,
la chambre d'entrée (120) et le conduit de sortie (12) étant positionnés au fond du paquet (100),
et le canal de compartimentation (250) délimitant un volume interne définissant une chambre primaire (21) recevant le flux entrant de fluide injecté dans l'ensemble de montage (10) et transportant cet écoulement de fluide vers le haut dans une chambre secondaire (22), le canal de compartimentation (250) délimitant un volume interne définissant cette chambre secondaire (22) où l'ingrédient de café est agencé.

2. Paquet (100) selon la revendication 1, dans lequel le volume interne défini par les feuilles de matériau présente une forme généralement plane définissant un plan orienté verticalement pendant la production de boisson, la chambre d'entrée (120) étant orientée essentiellement perpendiculairement au plan défini par le volume interne, le conduit de sortie (12) étant agencé essentiellement verticalement depuis le volume interne permettant un écoulement libre de la boisson de café extraite du paquet (100).

3. Paquet (100) selon l'une quelconque des revendications précédentes, dans lequel la chambre d'entrée (120) est configurée de manière réversible dans le paquet de sorte qu'un premier couvercle pouvant être percé est posé sur l'un des côtés de la chambre d'entrée (120) et un deuxième couvercle pouvant être percé est posé sur le côté opposé de la chambre d'entrée (120).

4. Paquet (100) selon la revendication 3, dans lequel l'ensemble de montage (10) comprend deux encoches d'entrée agencées symétriquement (110, 110') permettant au fluide de s'écouler hors du volume interne de la chambre d'entrée (120).

5. Paquet (100) selon l'une quelconque des revendications 3 et 4, l'ensemble de montage (10) étant réalisé dans un matériau plastique rigide, de préférence réalisé par moulage par injection, le matériau étant de préférence choisi parmi : du polypropylène, du polyéthylène, du poly(téréphtalate d'éthylène) et/ou du poly(acide lactique).

6. Paquet (100) selon l'une quelconque des revendications 3 à 5, dans lequel le conduit de sortie (12) est fermé au moyen d'un bouchon (14), le bouchon (14) étant attaché à l'ensemble de montage (10) sur un autre de ses côtés, le conduit de sortie (12) comprenant en outre une zone affaiblie (16) à proximité du bouchon (14) permettant la séparation du bouchon (14) du conduit de sortie (12).

7. Paquet (100) selon l'une quelconque des revendications précédentes, dans lequel le volume interne du paquet est défini par deux feuilles flexibles de matériau liées ensemble au moins sur leurs côtés latéraux, ces feuilles flexibles conformant également au moins un couvercle de perçage au-dessus de la chambre d'entrée (120).

8. Paquet (100) selon l'une quelconque des revendications 1 à 6, dans lequel le volume interne du paquet est configuré par une seule feuille flexible pliée en deux pour former deux pièces jointes au niveau de ses bords libres.

9. Paquet (100) selon l'une quelconque des revendications précédentes, dans lequel les feuilles de matériau créant le volume interne du paquet sont imperméables à l'eau, liées entre elles par thermoscellage et sont constituées d'un matériau étant l'un ou une combinaison des éléments suivants : stratifiés plastiques, feuille métallisée ou feuille d'aluminium ou matériau à base de fibres.

10. Paquet (100) selon l'une quelconque des revendications précédentes, comprenant en outre un distributeur de fluide (24) comprenant une pluralité d'éléments de configuration de distributeur (240) pour distribuer de manière homogène l'écoulement de fluide dans le bloc avant qu'il s'écoule à travers l'ingrédient de café.

11. Paquet (100) selon la revendication 10, dans lequel le distributeur de fluide (24) est configuré en joignant les feuilles de matériau configurant le volume intérieur du paquet pour définir les éléments de configuration de distributeur (240).

12. Paquet (100) selon l'une quelconque des revendications 10 et 11, dans lequel les caractéristiques de distribution et d'homogénéisation du distributeur de fluide (24) sont fonction de la taille et du nombre des éléments de configuration de distributeur (240), ainsi que de la distance entre ces éléments de configuration de distributeur (240).

13. Paquet (100) selon l'une quelconque des revendications précédentes, comprenant en outre un moyen d'identification (60) comprenant les informations sur les paramètres de traitement pour extraire la boisson de café, en fonction de l'ingrédient de café, les paramètres de traitement étant au moins l'un ou une combinaison des éléments suivants : température du fluide réceptionné dans la chambre d'entrée (120), volume total de fluide et écoulement de fluide réceptionné à l'intérieur de la chambre d'entrée (120).

14. Paquet (100) selon la revendication 13, dans lequel deux ensembles de moyens d'identification agencés symétriquement (60) sont agencés dans le paquet, de sorte que les paramètres de traitement dans les moyens d'identification (60) puissent être lus de manière réversible.

15. Paquet (100) selon l'une quelconque des revendications 13 et 14, dans lequel les moyens d'identification (60) comprennent des moyens de reconnaissance étant au moins l'un ou une combinaison des éléments suivants : codes mécaniques, codes optiques, étiquettes RFID, codes à barres, codes magnétiques, codes à gaufrage ou DEL, les moyens de reconnaissance comprenant de préférence une pluralité de trous poinçonnés disposés sur les bords latéraux liés du paquet (100).
